# EUROPÄISCHE PATENTSCHRIFT

(11) **EP 2 225 188 B1**
(45) Veröffentlichungstag und Bekanntmachung des Hinweises auf die Patenterteilung: **30.05.2012**
(21) Anmeldenummer: 08864100.6
(22) Anmeldetag: 18.12.2008
(51) Int. Cl.: C05G 3/08, C05G 3/00, C05C 9/00

(54) **MISCHUNG ZUR BEHANDLUNG VON HARNSTOFFHALTIGEN DÜNGEMITTELN**
MIXTURE FOR THE TREATMENT OF UREA-CONTAINING FERTILIZERS
MÉLANGE POUR LE TRAITEMENT D'ENGRAIS CONTENANT DE L'URÉE

(30) Priorität: 22.12.2007 DE 102007062614
(43) Veröffentlichungstag der Anmeldung: 08.09.2010
(73) Patentinhaber: Fertiva GmbH, 68165 Mannheim (DE)
(72) Erfinder: RAHN, Ralf-Thomas, 68167 Mannheim (DE); BÜHLER, Gerd, 67346 Speyer (DE); WISSEMEIER, Alexander, 67346 Speyer (DE); WEIGELT, Wolfgang, 67373 Dudenhofen (DE)
(74) Vertreter: Féaux de Lacroix, Stefan
(86) Internationale Anmeldenummer: PCT/DE2008/002091
(87) Internationale Veröffentlichungsnummer: WO 2009/079994

(56) Entgegenhaltungen:
- EP-A1- 1 820 788
- WO-A1-00/61522
- US-A- 5 352 265
- US-A- 5 364 438
- US-A1- 2004 031 303
- BHARATI K ET AL: "Influence of six nitrification inhibitors on methane production in a flooded alluvial soil" NUTRIENT CYCLING IN AGROECOSYSTEMS, Bd. 58, Nr. 1-3, November 2000 (2000-11), Seiten 389-394, XP002544171 ISSN: 1385-1314

## Beschreibung

Die Erfindung betrifft eine Mischung zur Behandlung von harnstoffhaltigen Düngemitteln, insbesondere mit verbesserter Urease-hemmender Wirkung, deren Verwendung sowie harnstoffhaltige Düngemittel, die diese Mischung enthalten.

Weltweit wird die überwiegende und weiter steigende Menge des für die Düngung verwendeten Stickstoffs in Form von Harnstoff bzw. harnstoffhaltigen Düngemitteln eingesetzt. Harnstoff selbst ist jedoch eine nicht oder kaum aufgenommene Stickstoffform, da er relativ rasch durch das im Boden ubiquitär vorhandene Enzym Urease zu Ammoniak und Kohlendioxid hydrolisiert wird (Mobley, H. L. T., Island, M. D. Hausinger, R. P. (1995) Molecular biology of microbial ureases, Microbiol. Rev. 59, 452-480). Dabei wird unter Umständen gasförmiges Ammoniak an die Atmosphäre abgegeben, welches dann nicht mehr im Boden für die Pflanzen zur Verfügung steht, wodurch die Effizienz der Düngung reduziert wird.

Es ist bekannt, dass man die Stickstoffausnutzung beim Einsatz harnstoffhaltiger Düngemittel verbessern kann, indem man harnstoffhaltige Düngemittel zusammen mit Substanzen ausbringt, welche die enzymatische Harnstoffspaltung verringern oder inhibieren können (für einen allgemeinen Überblick siehe Kiss, S. Simihäian, M. (2002) Improving Efficiency of Urea Fertilizers by Inhibition of Soil Urease Activity, ISBN 1-4020-0493-1, Kluwer Academic Publishers, Dordrecht, The Netherlands). Zu den potentesten bekannten Ureaseinhibitoren gehören N-Alkylthiophosphorsäuretriamide und N-Alkylphosphorsäuretriamide, welche beispielsweise in EP 0 119 487 beschrieben sind.

Auch Gemische von N-Alkylthiophosphorsäuretriamiden wie N-(n-Butyl)thiophosphorsäuretriamid (NBPT) und N-(n-Propyl)thiophosphorsäuretriamid (NPPT) sind einsetzbar.

Diese Urease-Inhibitoren sind beispielsweise in der US 4,530,714 beschrieben. Damit diese Verbindungsklasse als Urease-Hemmstoff wirkten kann, muss zunächst eine Umwandlung in die entsprechende Oxoform stattfinden. Anschließend reagiert diese mit der Urease und bewirkt deren Hemmung.

Es empfiehlt sich, die Urease-Hemmstoffe zusammen mit dem Harnstoff auf bzw. in den Boden zu geben, da auf diese Weise sichergestellt wird, dass der Hemmstoff zusammen mit dem Dünger mit dem Boden in Kontakt kommt. Der Wirkstoff kann dabei im Harnstoff inkorporiert sein, beispielsweise, indem er vor der Harnstoff-Granulierung oder der Prillung in die Schmelze eingelöst wird. Ein derartiges Verfahren ist beispielsweise in der US 5,352,265 beschrieben. Eine weitere Möglichkeit besteht darin, den Wirkstoff auf das Harnstoff-Granulat bzw. die Prills aufzutragen, beispielsweise in Form einer Lösung.

Entsprechende Verfahren zur Aufbringung und geeignete Lösungsmittel sind beispielsweise in der EP-A-1 820 788 beschrieben.

Der Wirkstoff weist nur eine begrenzte Lagerstabilität auf. Die Lagerstabilität ist umso geringer, je höher die Temperatur ist. Wenn beispielsweise Harnstoff unter tropischen Bedingungen gelagert wird, sind in der Regel nach etwa vier Wochen Lagerung mehr als 60 % des Wirkstoffs zersetzt. Wird der Wirkstoff in die Harnstoffschmelze eingetragen, ist die Zersetzung geringer. Für die Vermarktung des mit dem Wirkstoff stabilisierten Harnstoffs ist es jedoch vielfach unerläßlich, den Wirkstoff auf Harnstoff aufzubringen und das behandelte Düngemittel bis zur Ausbringung zu lagern.

Aufgabe der vorliegenden Erfindung ist die Bereitstellung einer Mischung zur Behandlung von harnstoffhaltigen Düngemitteln, insbesondere zur Urease-Hemmung, die nach Ausbringen auf harnstoffhaltige Düngemittel über einen längeren Zeitraum lagerstabil ist, das Durchlaufen verschiedene Distributionsstufen besser überstehen lässt und den auf Harnstoff aufgebrachten Wirkstoff vor einer Zersetzung oder einem Verlust schützt. Die Mischung soll toxikologisch unkritisch sein und die Aktivität des Wirkstoffs nicht negativ beeinflussen.

Die Aufgabe wird erfindungsgemäß gelöst durch eine Mischung zur Behandlung von harnstoffhaltigen Düngemitteln, enthaltend
a) mindestens ein (Thio)phosphorsäuretriamid der allgemeinen Formel (I) und/oder (Thio)phosphorsäurediamid der allgemeinen Formel (II)

   R¹R²N-P(X)(NH₂)₂ (I)

   R¹O-P(X)(NH₂)₂ (II)

   mit der Bedeutung
   - X: Sauerstoff oder Schwefel,
   - R¹ und R²: unabhängig voneinander Wasserstoff, jeweils substituiertes oder unsubstituiertes C₁₋₁₀-Alkyl, C₃₋₁₀-Cycloalkyl, C₃₋₁₀- Heterocycloalkyl, C₆₋₁₀-Aryl, C₆₋₁₀-Heteroaryl oder Diaminocarbonyl, wobei R¹ und R² zusammen mit dem sie verbindenden Stickstoffatom auch einen 5- oder 6-gliedrigen gesättigten oder ungesättigten heterocyclischen Rest bilden können, der gegebenenfalls auch ein oder zwei weitere Heteroatome, ausgewählt aus der Gruppe, bestehend aus Stickstoff, Sauerstoff und Schwefel, enthalten kann, als Komponente A,
b) mindestens einem Amin als Komponente B. ausgewählt aus Methyldiethanolamin, Tetrahydroxypropylethylendiamin, Trimethylaminoethylethanolamin, N,N,N',N'-Tetramethyl-1,6-hexandiamin, N,N',N"-Tris(dimethylaminopropyl)hexahydrotriazin, 2,2'-Dimorpholinyldiethylether oder Gemischen davon wobei Komponente B in mindestens der 0,2-fachen molaren Menge der Komponente A eingesetzt wird.

Die Erfindung betrifft zudem die Verwendung der Mischung als Additiv und Beschichtungsmittel für harnstoffhaltige Stickstoffdüngemittel.

Die Erfindung betrifft ferner die Verwendung der Mischung zur Verminderung der Stickstoffverluste bei organischen Düngern oder während der Güllelagerung und zur Absenkung der Ammoniaklast in Tierställen.

Die Erfindung betrifft ferner ein harnstoffhaltiges Düngemittel, enthaltend die erfindungsgemäße Mischung in einer solchen Menge, dass der Gesamtgehalt der Komponente A, bezogen auf den enthaltenen Harnstoff, 0,001 bis 0,5 Gew.-% beträgt.

Es wurde erfindungsgemäß gefunden, dass der auf Harnstoff aufgebrachte Wirkstoff der Komponente A eine deutlich höhere Lagerstabilität aufweist (mindestens 2-3 Monate), wenn er in Kombination mit mindestens einem Amin mit einem Siedepunkt von mehr als 100°C als Komponente B eingesetzt wird. Das Amin der Komponente B weist dabei vorzugsweise einen Siedepunkt von mehr als 150°C, besonders bevorzugt von mehr als 200°C bei Umgebungsdruck (1 bar) auf. Es handelt sich dabei um tertiäre Amine oder Polyamine, die mehrere dieser Aminogruppen, tragen. Bevorzugt werden tertiäre Amine eingesetzt, die auch in polymerer Form vorliegen können. Bevorzugt werden solche Amine eingesetzt, die keine chemische Reaktion mit dem Wirkstoff der Komponente A oder einem gegebenenfalls mitverwendeten Lösungsmittel der Komponente C eingehen.

Die Komponente B wird in einer zur Erhöhung der Lagerstabilität des Wirkstoffs der Komponente A auf harnstoffhaltigen Düngemitteln ausreichenden Menge eingesetzt. Komponente B soll in mindestens der 0,2-flachen molaren Menge der Komponente A eingesetzt werden, besonders bevorzugt in der 0,5- bis 3-fachen molaren Menge, insbesondere in der 1- bis 2-fachen molaren Menge.

Amine mit einem hohen Siedepunkt sind in der Anwendung auch aus Gründen des Geruchs sowie des Explosionsschutzes vorteilhaft.

Erstaunlicherweise weisen Amide, wie beispielsweise N-Methylpyrrolidon (NMP), keine stabilisierende Wirkung auf.

Der stabilisierende Effekt ist dabei unabhängig von einer Mitverwendung eines Lösungsmittels. Der Aminzusatz zeigt sowohl bei Verwendung von NMP wie auch bei Verwendung von Alkylendiolen wie 1,2-Propandiol als Lösungsmittel eine stabilisierende Wirkung.

Durch Zusatz von polymeren Hilfsstoffen kann darüber hinaus die stabilisierende Wirkung noch weiter verstärkt werden.

Als Komponente A wird mindestens ein (Thio)phosphorsäuretriamid der allgemeinen Formel (I) und/oder ein (Thio)phosphorsäurediamid der allgemeinen Formel (II) eingesetzt. Dabei kann es sich um Einzelverbindungen wie auch um Mischungen von zwei oder mehr derartigen Verbindungen handeln. Beispielsweise kann es sich um Mischungen handeln, wie sie in der EP-A-1 820 788 beschrieben sind.

Die Reste R¹ und R² können jeweils unsubstituiert oder substituiert sein, z. B. durch Halogen und/oder Nitro.

Beispiele für Alkylgruppen sind Methyl, Ethyl, Propyl, Isopropyl, n-Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Nonyl, Isononyl, Decyl und Isodecyl. Cycloalkylgruppen sind z. B. Cyclopropyl, Cyclobutyl, Cyclopentyl, Cyclohexyl und Cyclooctyl, Arylgruppen sind z. B. Phenyl oder Naphthyl bzw. substituiert 2-Nitrophenyl. Beispiele für heterocyclische Reste R₁R₂N- sind Piperazinyl-, Morpholinyl-, Pyrrolyl-, Pyrazolyl-, Triazolyl-, Oxazolyl-, Thiazolyl- oder Imidazolylgruppen.

Solche Verbindungen sind beispielsweise aus EP 0 119 487, WO 00/58317 und EP 1 183 220 als Ureaseinhibitoren bekannt.

Ein Beispiel für Verbindungen der Formel (II) ist Phenylphosphordiamidat.

Bevorzugt sind Zubereitungen, welche N-n-Butylthiophosphorsäuretriamid (NBPT) als einen der Wirkstoffe enthalten. Bei dem mindestens einen weiteren Wirkstoff handelt es sich vorzugsweise um ein Derivat, ausgewählt aus der Gruppe, bestehend aus N-Cyclohexyl-, N-Pentyl-, N-iso-Butyl- und N-Propylphosphorsäuretriamid und entsprechenden Thiophosphorsäuretriamiden. Besonders bevorzugt sind solche Zubereitungen, welche NBPT in Mengen von 40 bis 95 Gew.-%, ganz besonders bevorzugt von 60 bis 80 Gew.-% enthalten, jeweils bezogen auf die gesamte Wirkstoffmenge der Komponente A.

Thiophosphorsäuretriamide werden bekanntermaßen relativ leicht zu den entsprechenden Phosphorsäuretriamiden hydrolisiert. Da Feuchtigkeit in der Regel nicht vollständig ausgeschlossen werden kann, liegen Thiophosphorsäuretriamid und das korrespondierende Phosphorsäuretriamid häufig im Gemisch miteinander vor. Der Begriff "(Thio)phosphorsäuretriamid" bezeichnet daher in dieser Schrift sowohl die reinen Thiophosphorsäuretriamide bzw. Phosphorsäuretriamide als auch deren Gemische.

Besonders, bevorzugt sind N-Alkylthiophosphorsäuretriamide (mit X = S und R₂ = H) und N-Alkylphosphorsäuretriamide (mit X = O und R₂ = H).

Die Herstellung solcher Ureaseinhibitoren kann z. B. nach bekannten Methoden aus Thiophosporylchlorid, primären oder sekundären Aminen und Ammoniak erfolgen, wie sei beispielsweise in US 5,770,771 beschrieben sind. Hierbei bringt man in einem ersten Schritt Thiophosphorylchlorid mit einem Äquivalent eines primären oder sekundären Amins in Gegenwart einer Base zur Reaktion und setzt das Produkt anschließend mit einem Überschuss Ammoniak zum Endprodukt um.

Weitere geeignete Ureaseinhibitoren sind beispielsweise in WO 00/61522, WO 00/58317, WO 02/083697, WO 01/87898, WO 2006/010389 beschrieben. Bei den dort beschriebenen Verbindungen handelt es sich beispielsweise um Thiophosphorsäuretriamide, heterocyclisch substituierte (Thio)phosphorsäuretriamide, N-(2-Pyrimidinyl)(thio)phosphorsäuretriamide und N-Phenylphosphorsäuretriamide.

In der EP-A-1 820 788 werden insbesondere Gemische aus N-(n-Butyl)thiophosphorsäuretriamid und N-(n-Propyl)thiophosphorsäuretriamid beschrieben.

Diese Gemische können erfindungsgemäß neben den Einzelsubstanzen besonders bevorzugt eingesetzt werden.

Die (Thio)phosphorsäuretriamide der allgemeinen Formel (I), bzw. (Thio)phosphorsäurediamide der allgemeinen Formel (II), die als Komponente A eingesetzt werden, können Reinstoffe sein oder Gemische von zweien oder mehreren Reinstoffen. Sie können auch synthesebedingt noch Nebenprodukte aus der Wirkstoffsynthese enthalten. In der Regel liegt die Komponente A in einer Reinheit von mindestens 70 % vor.

Die erfindungsgemäßen Mischungen können nur die Komponenten A und B enthalten. Dabei kann beispielsweise Komponente B gegebenenfalls als Lösungsmittel für Komponente A dienen, so dass sich eine flüssige oder leicht schmelzbare Zusammensetzung ergibt. Es können auch feste Gemische der Komponenten A und B erfindungsgemäß eingesetzt werden, wie auch Gemische in Emulsions- oder Dispersionsform.

Gemäß einer Ausführungsform der Erfindung kann die Mischung weiterhin ein Lösungsmittel für die (Thio)phosphorsäuretriamide als Komponente C enthalten. Dabei können alle geeigneten Lösungsmittel eingesetzt werden. Als Lösungsmittel kommen allgemein solche Verbindungen in Frage, die polar sind und damit ein ausreichendes Lösungsvermögen für die Komponente A aufweisen. Sie sollten vorzugsweise einen ausreichend hohen Siedepunkt aufweisen, so dass bei der Aufbringung nicht mit einem Verdampfen größerer Mengen an Lösungsmitteln zu rechnen ist. Beispiele geeigneter Lösungsmittel sind Alkohole, Amine, Carbonsäurederivate wie Ester, Amide, Harnstoffderivate, halogenierte Verbindungen, substituierte Aromaten und Gemische davon. Geeignete Lösungsmittel sind beispielsweise in EP-A-1 820, 788 beschrieben. Geeignete Lösungsmittel können Wasser, Alkohole, Glykole wie auch NMP oder Dimethylphthalat sein. Beispiele geeigneter flüssiger Formulierungen finden sich in WO 07/22568. Dort sind Lösungsmittel auf Basis von Glykolen oder Glykolderivaten beschrieben. Beispiele geeigneter Glykole sind Propylenglykol und Dipropylenglykol. Die Glykole können allgemein als endständige C₂₋₁₀-Alkylendiole beschrieben werden. Beispiele weiterer Glykole sind Neopentylglykol, Pinakol, 2,2-Diethyl-1,3-Propandiol, 2-Ethyl-1,3-Hexandiol, 2-Ethyl-2-Butyl-1,3-Propandiol, Isobutenglykol, 2,3-Dimethyl-1,3-Propandiol, 1,3-Diphenyl-1,3-Propandiol, 3-Methyl-1,3-Butandiol. Beispiele cyclischer Glykole sind 1,4-Cyclohexandimethanol und p-Xylylenglykol. Beispiele von Polyglykolen sind Polyethylenglykol und Polypropylenglykole. Geeignete Derivate können Ester wie Stearate oder Caprylate sein. Es können beispielsweise auch Glycerin oder Glycerinester eingesetzt werden. Weitere geeignete zusätzliche Lösungsmittel können flüssige Amide sein, 2-Pyrrolidon und N-Alkyl-2-Pyrrolidone wie NMP.

Besonders bevorzugt wird als Lösungsmittel Dimethylphthalat eingesetzt.

Alternativ können auch feste Formulierungen verwendet werden, die außer der Mischung noch Zusatzstoffe wie Füllstoffe, Bindemittel oder Granulierhilfsmittel wie Kalk, Gips, Siliziumdioxid oder Kaolinit enthalten können. Erfindungsgemäße Mischungen können neben den Komponenten A und B auch gleichzeitig Lösungsmittel oder Lösungsmittelgemische und Zusatzstoffe umfassen, sowie als Suspension vorliegen.

Erfindungsgemäß können als weitere Komponente D Polymere in gelöster oder dispergierter Form in den Mischungen enthalten sein. Dabei sind solche Polymere bevorzugt, die mit den Komponenten A und B keine chemischen Reaktionen eingehen. Die Polymere können in Lösung, Emulsion oder dispergierter Form vorliegen. Bevorzugt werden lösliche Polymere eingesetzt, die bevorzugt ein Zahlenmittel des Molekulargewichts von mindestens 5000 aufweisen. Geeignete Polymere können sich von vinylischen Monomeren herleiten, beispielsweise von Styrolen oder (Meth)acrylaten oder Acrylnitril. Beispielsweise können lösliche Polystyrole, lösliche Polystyrol-Acrylnitril-Polymere oder auch derartige, Pfropfkautschuke enthaltende Polymere, eingesetzt werden. Ferner können beispielsweise Polyester oder Polyalkylenglykole eingesetzt werden. Die Stabilisierung der Ureaseinhibitoren der Komponente A wird durch den Zusatz der Polymere nochmals verbessert. Sie können auch zur verzögerten Freisetzung der Mischung in Art einer "controlled release" eingesetzt werden. Die Bestandteile sind in der Mischung bevorzugt in folgenden Mengen enthalten.

Der Anteil des Ureaseinhibitors der Komponente A beträgt vorzugsweise 5 bis 90 Gew.-%, besonders bevorzugt 10 bis 40 Gew.-%, insbesondere 15 bis 30 Gew.-%. Der Anteil des Amins der Komponente B beträgt vorzugsweise 1 bis 50 Gew.-%, besonders bevorzugt 2 bis 25 Gew.-%, insbesondere 3 bis 15 Gew.-%. Sofern ein Lösungsmittel als Komponente C mitverwendet wird, beträgt der Anteil des Lösungsmittels an der Mischung vorzugsweise' 10 bis 94 Gew.-%, besonders bevorzugt 20 bis 88 Gew.-%, insbesondere 30 bis 82 Gew.-%. Die Menge der optionalen Polymerkomponente D beträgt vorzugsweise 0 bis 70 Gew.-%, besonders bevorzugt 0 bis 50 Gew.-%, insbesondere 0 bis 25 Gew.-%. Bei Vorliegen der Komponente D beträgt die Menge vorzugsweise 0,5 bis 70 Gew.-%, besonders bevorzugt 1 bis 50 Gew.-%, insbesondere 2 bis 25 Gew.-%. Die Gesamtmenge der Komponenten A, B, C und gegebenenfalls D ergibt dabei 100 Gew.-%.

Die erfindungsgemäßen Mischungen können durch einfaches Vermischen der Komponenten A, B und gegebenenfalls C und D hergestellt werden. Dabei kann das Vermischen auch bei erhöhter Temperatur von z. B. 30 bis 60°C durchgeführt werden. Die Reihenfolge der Zugabe der einzelnen Komponenten ist dabei beliebig. Bei Mitverwendung eines Lösungsmittels werden typischerweise zunächst die Komponenten A und B in dem Lösungsmittel gelöst, und anschließend wird das Polymer der Komponente D eingebracht. Sofern ein Erwärmen der Mischungen bei der Herstellung notwendig ist, wird vorzugsweise Komponente A zuletzt zugegeben.

Die erfindungsgemäßen, Mischungen werden als Additiv oder Beschichtungsmittel für harnstoffhaltige Stickstoffdüngemittel eingesetzt.

Als Additiv können sie dabei vor, nach oder gemeinsam mit einem harnstoffhaltigen Stickstoffdüngemittel ausgebracht werden. Dabei kann die erfindungsgemäße Mischung separat vom harnstoffhaltigen Stickstoffdüngemittel dosiert werden. Häufiger wird die erfindungsgemäße Mischung in das harnstoffhaltige Stickstoffdüngemittel eingebracht, beispielsweise in einer Schmelze, oder als Beschichtungsmittel auf das harnstoffhaltige Stickstoffdüngemittel aufgebracht. Bei der Mitverwendung als Additiv für harnstoffhaltige Stickstoffdüngemittel werden die erfindungsgemäßen Mischungen vorzugsweise in einer Menge von 0,1 bis 30 Gew.-.%, bezogen auf das Gewicht des Stickstoffdüngemittels, eingesetzt.

Parallel zur Verbesserung der Stickstoff-Ausnutzung der harnstoffhaltigen, mineralischen und organischen Düngemittel wird durch die Verwendung dieser Mittel erreicht, dass es zu einer teilweisen erheblichen Steigerung der Erträge bzw. der Biomasseproduktion von Kulturpflanzen kommt.

Gleichermaßen können die erfindungsgemäßen Mischungen organischen Düngern, wie beispielsweise Gülle, bereits während der Lagerung zugesetzt werden, um auf diese Weise Stickstoff-Nährstoff-Verluste infolge einer gebremsten Umwandlung der einzelnen Stickstoffformen zu gasförmigen und somit flüchtigen Stickstoffverbindungen zu vermeiden und um dadurch gleichzeitig zur Senkung der Ammoniakbelastung in Tierställen beizutragen.

Die erfindungsgemäßen Mischungen weisen eine unerwartet hohe biologische Wirksamkeit auf. So sind besonders die außerordentlich hohen Ertragszuwachsraten hervorzuheben.

Dabei ist es unerheblich, ob die erfindungsgemäßen Mittel in das Düngemittel eingearbeitet, z. B, eingeschmolzen, oder aber auf die Düngemitteloberfläche aufgetragen bzw. getrennt von der Düngemittelausbringung in Form eines beispielsweise (Suspensions)konzentrats, einer Lösung oder einer Formulierung appliziert werden.

Es ist erfindungsgemäß besonders bevorzugt, die erfindungsgemäßen Mischungen als Beschichtungsmittel für harnstoffhaltige Stickstoffdüngemittel zu verwenden.

Die Erfindung betrifft auch ein harnstoffhaltiges Düngemittel, enthaltend eine Mischung, wie sie vorstehend beschrieben ist, in einer solchen Menge, dass der Gesamtgehalt der Komponente A, bezogen auf den enthaltenen Harnstoff, 0,001 bis 0,5 Gew.-% beträgt. Der Gehalt der Komponente A, bezogen auf den enthaltenen Harnstoff, beträgt besonders bevorzugt 0,01 bis 0,3 Gew.-%, insbesondere 0,02 bis 0,2 Gew.-%. Dabei ist im harnstoffhaltigen Düngemittel die Mischung bevorzugt auf die Oberfläche des harnstoffhaltigen Düngemittels aufgebracht.

Unter einem harnstoffhaltigen Düngemittel ist zunächst einmal Harnstoff selber zu verstehen. Dieser hat in marktüblicher Düngemittelqualität eine Reinheit von mindestens 90 % und kann beispielsweise kristallin, granuliert, kompaktiert, geprillt oder gemahlen vorliegen. Daneben sollen auch Mischungen von Harnstoff mit einem oder mehreren weiteren Stickstoffdüngemitteln wie Ammoniumsulfat, Ammoniumnitrat, Ammoniumchlorid, Cyanamid, Dicyandiamid (DCD) oder Calciumnitrat sowie Langzeitdüngemitteln, beispielsweise Harnstoff-Formaldehyd-, Harnstoff-Acetaldehyd- oder Harnstoff-Glyoxal-Kondensate umfasst sein. Weiterhin sind auch harnstoffhaltige Mehrnährstoffdünger umfasst, welche neben Stickstoff noch mindestens einen weiteren Nährstoff wie Phosphor, Kalium, Magnesium, Calcium oder Schwefel enthalten. Daneben können auch die Spurenelemente Bor, Eisen, Kupfer, Zink, Mangan oder Molybdän enthalten sein. Derartige harnstoffhaltige Mehrnährstoffdünger können ebenfalls granuliert, kompaktiert, geprillt, gemahlen oder als Kristallmischung vorliegen. Außerdem sind auch flüssige harnstoffhaltige Düngemittel umfasst, wie Ammoniumnitrat-HarnstoffLösung oder auch Gülle. Die harnstoffhaltigen Düngemittel können außerdem noch einen oder mehrere weitere Wirkstoffe wie beispielsweise Nitrifikationsinhibitoren, Herbizide, Fungizide, Insektizide, Wachstumsregulatoren, Hormone, Pheromone oder andere Pflanzenschutzmittel oder Bodenhilfsstoffe in Mengen von 0,01 bis 20 Gew.-% enthalten.

Die erfindungsgemäßen Düngemittel sind dadurch erhältlich, dass man die erfindungsgemäßen Mischungen entweder in flüssiger oder auch in fester Form mit dem harnstoffhaltigen Düngemittel vermischt oder in diese eingranuliert, einkompaktiert oder einprillt, indem sie einem entsprechenden Düngemittel-Gemisch bzw. einer Maische oder Schmelze zugegeben werden. Besonders bevorzugt werden die erfindungsgemäßen Mischungen oberflächig auf bereits fertige Granulate, Kompaktate oder Prills der harnstoffhaltigen Düngemittel aufgebracht, beispielsweise durch Aufsprühen, Aufpudern oder Imprägnieren. Dies kann auch unter Einsatz weiterer Hilfsstoffe wie Haftungsvermittlern oder Umhüllungsmaterialien erfolgen. Geeignete Apparate zur Durchführung dieser Aufbringung sind beispielsweise Teller, Trommeln, Mischer oder Wirbelbettapparate, die Aufbringung kann aber auch auf Förderbändern bzw. deren Abwurfstellen oder mittels pneumatischer Feststoffförderer erfolgen. Eine abschließende Behandlung mit Antibackmitteln und/oder Antistaubmitteln ist ebenfalls möglich. Die erfindungsgemäßen Düngemittel oder Mischungen werden bei der Düngung mit harnstoffhaltigen Düngemitteln verwendet. Bevorzugt erfolgt die Applikation auf einer landwirtschaftlich oder gärtnerisch genutzten Fläche.

Die Erfindung wird durch die nachfolgenden Beispiele näher erläutert.

### Beispiele

In den nachfolgenden Beispielen bedeuten
- NBPT: N-(n-Butyl)-thiophosphorsäuretriamid
- NPPT: N-(n-Propyl)-thiophoshorsäuretriamid
- NMP: N-Methyl-pyrrolidon
- MDEA: Methyldiethanolamin
- KAS: Kalkammonsalpeter

Die Beispiele 1 und 2 betreffen die Lagerstabilität des Wirkstoffs auf den erfindungsgemäß behandelten Düngemitteln, und Beispiel 3 betrifft die Pflanzenverträglichkeit der erfindungsgemäßen Mischungen.

### Beispiel 1:

In einem Lagerversuch über 60 Tage bei 30 °C und einer Luftfeuchtigkeit von 60 % wurden folgende NBPT -Verluste (Analytik per HPLC) gemessen. Das NBPT wurde zu Beginn des Lagerversuchs in einer Konzentration von 0,12 Gew.-% bezogen auf den Dünger in einer Lösung mit der folgenden Zusammensetzung aufgetragen. Als Trägerdünger wurde granulierter Harnstoff verwendet.

| Zusammensetzung der Formulierung | NBPT-Verlust nach 60 Tagen |
|---|---|
| 25 % NBPT, Dimethylphthalat | 95 % |
| 25 % NBPT, 18 % Methyldiethanolamin, Dimethylphthalat | 68 % |
| 25 % NBPT, 5 % Polystyrol (Luran 368 R), Dimethylphthalat | 95 % |
| 25 % NBPT, 18 % Methyldiethanolamin, 5 % Polystyrol (Luran 368 R), Dimethylphthalat | 59 % |
| 25 % NBPT, 5 % Polyethylenglykol, Dimethylphthalat | 95 % |
| 25 % NBPT, 18 % Methlydiethanolamin, 5 % Polyethylenglykol, Dimethylphthalat | 42 % |
| Vergleich: 25 % NBPT in Dimethylphthalat gelöst in Harnstoffschmelze eingetragen und auf Pastillierband erstarren gelassen | 40% |

### Beispiel 2:

In einem weiteren Lagerversuch über 30 Tage bei 30 °C und einer Luftfeuchtigkeit von 60 % wurden folgende NBPT-Verluste (Analytik per HPLC) gemessen. Das NBPT wurde zu Beginn des Lagerversuchs in einer Konzentration von 0,12 Gew.-% bezogen auf den Dünger in einer Lösung mit der folgenden Zusammensetzung aufgetragen. Als Trägerdünger wurde granulierter Harnstoff verwendet.

| Zusammensetzung der Formulierung | NBPT-Verlust nach 30 Tagen |
|---|---|
| 25 % NBPT, Dimethylphthalat | 54% |
| 25 % NBPT, 6 % Methyldiethanolamin, Dimethylphthalat | 9% |
| 25 % NBPT, 12 % Methyldiethanolamin, Dimethylphthalat | 7% |
| 25 % NBPT, 18 % Methyldiethanolamin, Dimethylphthalat | 9% |
| 25 % NBPT, 36 % Methyldiethanolamin, Dimethylphthalat | 14% |
| 25. % NBPT, N-Methylpyrrolidon | 36% |
| 25 % NBPT, 18 % N,N,N',N'-Tetramethyl-1,6-hexandiamin, Dimethylphthalat | 5% |
| 25 % NBPT, 18 % Trimethylaminoethylethanolamin, Dimethylphthalat | 7% |
| 25 % NBPT, 18 % N,N',N"-Tris(Dimethylamino-propyl)-hexahydrotriazin, Dimethylphthalat | 7% |
| Vergleich: 25 % NBPT in gelöst in Harnstoffschmelze eingetragen und auf Pastillierband erstarren lassen | 8% |

### Beispiel 3:

Im Gewächshaus in 12er Plastiktöpfen durchgeführte pflanzenbauliche Versuche zeigten die Pflanzenverträglichkeit von Methyldiethanolamin, Dimethylphthalat zu Harnstoff oder als Vergleich Kalkammonsalpeter. Verwendet wurde Limburgerhofboden (anlehmiger Sand, pH 6,8) mit Chinakohl als Prüfkultur. Der Boden wies folgende Eigenschaften auf, bestimmt nach der CAL-Methode:

| | |
|---|---|
| P₂O₅ | 35 mg/100 g Boden |
| K₂O | 18 mg/100 g Boden |
| Mg | 5 mg/100 g Boden |

| | | | |
|---|---|---|---|
| Abschlämmbare Teile: | Ton | < 2 µm | 7 % |
| | | <20 µm | 17% |
| | Sand | | 76 % |
| Gesamt-Stickstoff: | | | 0,08 % |
| Humus: | | | 1,2 % |

Die Dünger wurden einen Tag vor der Pflanzung in den Boden eingemischt. Analoge Ergebnisse ergaben sich bei Aufstreuen des Düngers auf den Boden (nicht dargestellt). In beiden Fällen wurden die Gefäße gärtnerisch mit Leitungswasser von oben gegossen.

| Dünger (eingemischt in Boden) | Düngungsniveau (g N/Gefäß) | % Pflanzenschaden 5 Tage nach Pflanzung | Frischmasse des Sprosses 21 Tage nach Pflanzung (g/Gefäß) |
|---|---|---|---|
| Harnstoff | 0,05 | 0 | 14,3 |
| Harnstoff | 0,1 | 0 | 20,05 |
| Harnstoff | 0,2 | 7,5 | 11,65 |
| | | | |
| Harnstoff + 0,04 % NBPT | 0,05 | 0 | 16,9 |
| Harnstoff + 0,04 % NBPT | 0,1 | 7,5 | 22,4 |
| Harnstoff + 0,04 % NBPT | 0,2 | 8,0 | 7,6 |
| | | | |
| Harnstoff + 0,12 NBPT + 0,12 % MDEA* | 0,05 | 0 | 16,0 |
| Harnstoff + 0,12 NBPT + 0,12 % MDEA* | 0,1 | 5 | 22,7 |
| Harnstoff + 0,12 NBPT + 0,12 % MDEA* | 0,2 | 7,5 | 9,9 |
| | | | |
| Kalkammonsalpeter (KAS) | 0,05 | 0 | 17,9 |
| Kalkammonsalpeter (KAS) | 0,1 | 0 | 26,7 |
| Kalkammonsalpeter (KAS) | 0,2 | 0 | 23,6 |
| Kalkammonsalpeter (KAS) | 0,4 | 0 | 7,4 |
| | | | |
| KAS + 0,07 % MDEA* | 0,1 | 0 | 25,8 |
| KAS + 0.14 % MDEA* | 0,1 | 0 | 26,7 |
| KAS + 0,28 % MDEA* | 0,1 | 0 | 24,0 |
| KAS + 0,56 % MDEA* | 0,1 | 0 | 27,4 |
| KAS + 1,4 % MDEA* | 0,1 | 0 | 25,2 |
| | | | |
| KAS + 0.035 % MDEA* | 0,2 | 0 | 25,9 |
| KAS + 0.07 % MDEA* | 0,2 | 0 | 27,4 |
| KAS + 0,14 % MDEA* | 0,2 | 0 | 20,7 |
| KAS + 0,28 % MDEA* | 0,2 | 0 | 25,3 |

| | | | |
|---|---|---|---|
| * MDEA = Methyldiethanolamin | | | |

## Patentansprüche

1. Mischung zur Behandlung von harnstoffhaltigen Düngemitteln, enthaltend
a) mindestens ein (Thio)phosphorsäuretriamid der allgemeinen Formel (I) und/oder (Thio)phosphorsäurediamid der allgemeinen Formel (II)
R¹R²N-P(X)(NH₂)₂ (I)
R¹O-P(X)(NH₂)₂ (II)
mit der Bedeutung
X Sauerstoff oder Schwefel,
R¹ und R² unabhängig voneinander Wasserstoff, jeweils substituiertes oder unsubstituiertes 2-Nitrophenyl, C₁₋₁₀-Alkyl, C₃₋₁₀-Cycloalkyl, C₃₋₁₀-Heterocycloalkyl, C₆₋₁₀-Aryl, C₆₋₁₀-Heteroaryl oder Diaminocarbonyl, wobei R¹ und R² zusammen mit dem sie verbindenden Stickstoffatom auch einen 5- oder 6-gliedrigen gesättigten oder ungesättigten heterocyclischen Rest bilden können, der gegebenenfalls auch ein oder zwei weitere Heteroatome, ausgewählt aus der Gruppe, bestehend aus Stickstoff, Sauerstoff und Schwefel, enthalten kann, als Komponente A,
b) mindestens einem Amin als Komponente B, ausgewählt aus Methyldiethanolamin, Tetrahydroxypropylethylendiamin, Trimethylaminoethylethanolamin, N,N,N',N'-Tetramethyl-1,6-hexandiamin, N,N',N"-Tris(dimethylaminopropyl)hexahydrotriazin, 2,2'-Dimorpholinyldiethylether oder Gemischen davon,
wobei Komponente Bin mindestens der 0,2-fachen molaren Menge der Komponente A eingesetzt wird.

2. Mischung nach Anspruch 1, **dadurch gekennzeichnet, dass** als (Thio)phosphorsäuretriamide der allgemeinen Formel (I) N-Alkylthiophosphorsäuretriamide mit den Bedeutungen X = S und R² = H und/oder N-Alkylphosphorsäuretriamide mit den Bedeutungen X = O und R² = H eingesetzt werden.

3. Mischung nach einem der Ansprüche 1 oder 2, weiterhin ein Lösungsmittel für die (Thio)phosphorsäuretriamide als Komponente C enthaltend.

4. Mischung nach einem der Ansprüche 1 bis 3, weiterhin ein Polymer in gelöster oder dispergierter Form als Komponente D enthaltend.

5. Mischung nach einem der Ansprüche 1 bis 4, enthaltend
5 bis 90 Gew.-% der Komponente A,
1 bis 50 Gew.-% der Komponente B,
0 oder 10 bis 94 Gew.-% der Komponente C,
0 bis 70 Gew.-% der Komponente D,
wobei die Gesamtmenge der Komponenten A bis D 100 Gew.-% ergibt.

6. Verwendung einer Mischung gemäß einem der Ansprüche 1 bis 5 als Additiv oder Beschichtungsmittel für harnstoffhaltige Stickstoffdüngemittel.

7. Verwendung nach Anspruch 6, **dadurch gekennzeichnet, dass** die Mischung in Form einer Formulierung, einer Lösung oder einer Dispersion getrennt oder gleichzeitig mit dem Düngemittel ausgebracht wird oder in das Düngemittel eingebracht oder auf das Düngemittel aufgebracht wird.

8. Verwendung einer Mischung gemäß einem der Ansprüche 1 bis 5 zur Verminderung der Stickstoffverluste bei organischen Düngern oder während der Güllelagerung und zur Absenkung der Ammoniaklast in Tierställen.

9. Harnstoffhaltiges Düngemittel, enthaltend eine Mischung gemäß einem der Ansprüche 1 bis 5 in einer solchen Menge, dass der Gesamtgehalt der Komponente A, bezogen auf den enthaltenen Harnstoff, 0,001 bis 0,5 Gew.-% beträgt.

10. Harnstoffhaltiges Düngemittel nach Anspruch 9, **dadurch gekennzeichnet, dass** die Mischung auf die Oberfläche des harnstoffhaltigen Düngemittels aufgebracht ist.

## Claims

1. Mixture for the treatment of urea-containing fertilizers, comprising
a) at least one (thio)phosphoric triamide of the general formula (I) and/or (thio)phosphoric diamide of the general formula (II)
R¹R²N-P(X)(NH₂)₂ (I)
R¹O-P(X)(NH₂)₂ (II)
with the following definitions:
X is oxygen or sulfur,
R¹ and R² independently of one another are hydrogen, in each case substituted or unsubstituted 2-nitrophenyl, C₁-₁₀ alkyl, C₃-₁₀ cycloalkyl, C₃-₁₀ heterocycloalkyl, C₆-₁₀ aryl, C₆-₁₀ heteroaryl or diaminocarbonyl, it also being possible for R¹ and R², together with the nitrogen atom joining them, to form a 5- or 6-membered saturated or unsaturated heterocyclic radical, which optionally may also contain one or two further heteroatoms selected from the group consisting of nitrogen, oxygen and sulfur, as component A,
b) at least one amine as component B, selected from methyldiethanolamine, tetrahydroxypropylethylenediamine, trimethylaminoethylethanolamine, N,N,N',N'-tetramethyl-1,6-hexanediamine, N,N,'N"-tris(dimethylaminopropyl)hexahydrotriazine, 2,2'-dimorpholinyldiethyl ether or mixtures thereof,
component B being used in at least 0.2 times the molar amount of component A.

2. Mixture according to Claim 1, **characterized in that** (thio)phosphoric triamides of the general formula (I) used are N-alkylthiophosphoric triamides having the definitions X = S and R² = H and/or N-alkylphosphoric triamides having the definitions X = O and R² = H.

3. Mixture according to either of Claims 1 and 2, further comprising a solvent for the (thio)phosphoric triamides, as component C.

4. Mixture according to any of Claims 1 to 3, further comprising a polymer in dissolved or dispersed form as component D.

5. Mixture according to any of Claims 1 to 4, comprising
5% to 90% by weight of component A,
1% to 50% by weight of component B,
0% or 10% to 94% by weight of component C,
0% to 70% by weight of component D,
the total amount of components A to D adding up to 100% by weight.

6. Use of a mixture according to any of Claims 1 to 5 as an additive or coating material for urea-containing nitrogen fertilizers.

7. Use according to Claim 6, **characterized in that** the mixture is delivered in the form of a formulation, solution or dispersion separately or simultaneously with the fertilizer or is incorporated into the fertilizer or is applied to the fertilizer.

8. Use of a mixture according to any of Claims 1 to 5 for reducing the nitrogen losses in organic fertilizers or during the storage of liquid manure and for lowering the ammonia load in animal stalls.

9. Urea-containing fertilizer comprising a mixture according to any of Claims 1 to 5 in an amount such that the total amount of component A, based on the urea present, is 0.001% to 0.5% by weight.

10. Urea-containing fertilizer according to Claim 9, **characterized in that** the mixture is applied to the surface of the urea-containing fertilizer.

## Revendications

1. Mélange destiné au traitement d'engrais contenant de l'urée, qui contient
a) au moins un (thio)phosphotriamide de formule générale (I) et/ou (thio)phosphodiamide de formule générale (II)
R¹R²N-P(X) (NH₂)₂ (I)
R¹O-P(X) (NH₂)₂ (II)
où
X représente un atome d'oxygène ou de soufre,
R¹ et R² représentent, indépendamment l'un de l'autre, un atome d'hydrogène, un groupe 2-nitrophényle, alkyle en C₁-C₁₀, cycloalkyle en C₃-C₁₀, hétérocycloalkyle en C₃-C₁₀, aryle en C₆-C₁₀, hétéroaryle en C₆-C₁₀ ou diaminocarbonyle, chacun substitué ou non substitué, R¹ et R² pouvant également former ensemble avec l'atome d'azote auquel ils sont liés un radical hétérocyclique à 5 ou 6 chaînons, saturé ou insaturé, qui peut éventuellement contenir également un ou deux autres hétéroatomes, choisis dans l'ensemble constitué par les atomes d'azote, d'oxygène et de soufre, en tant que composant A,
b) au moins une amine en tant que composant B, choisie parmi la méthyldiéthanolamine, la tétrahydroxypropyléthylènediamine, la triméthylaminoéthyléthanolamine, la N,N,N',N'-tétraméthyl-1,6-hexanediamine, la N,N',N" -tris(diméthylaminopropyl)hexahydrotriazine, le 2,2'-dimorpholinyldiéthyléther ou des mélanges de ceux-ci,
le composant B étant utilisé en au moins la quantité 0,2 fois molaire du composant A.

2. Mélange selon la revendication 1, **caractérisé en ce qu'**on utilise comme (thio)phosphotriamides de formule générale (I) des N-alkylthiophosphotriamides avec les significations X = S et R² = H et/ou des N-alkylphosphotriamides avec les significations X = O et R² = H.

3. Mélange selon la revendication 1 ou 2, qui en outre contient en tant que composant C un solvant pour les (thio)phosphotriamides.

4. Mélange selon l'une quelconque des revendications 1 à 3, qui en outre contient en tant que composant D un polymère sous forme dissoute ou dispersée.

5. Mélange selon l'une quelconque des revendications 1 à 4, qui contient
5 à 90 % en poids du composant A,
1 à 50 % en poids du composant B,
0 ou 10 à 94 % en poids du composant C,
0 à 70 % en poids du composant D,
la quantité totale des composants A à D étant égale à 100 % en poids.

6. Utilisation d'un mélange selon l'une quelconque des revendications 1 à 5, en tant qu'additif ou agent d'enrobage pour des engrais azotés contenant de l'urée.

7. Utilisation selon la revendication 6, **caractérisée en ce que** le mélange est épandu sous forme d'une composition, d'une solution ou d'une dispersion séparément de ou en même temps que l'engrais ou est introduit dans l'engrais ou appliqué sur l'engrais.

8. Utilisation d'un mélange selon l'une quelconque des revendications 1 à 5, destiné à éviter les pertes d'azote dans des engrais organiques ou pendant le stockage de purin et à abaisser la charge d'ammoniac dans des lieux où sont abrités des animaux.

9. Engrais contenant de l'urée, qui contient un mélange selon l'une quelconque des revendications 1 à 5, en une quantité telle que la teneur totale en composant A, par rapport à l'urée contenue, vaut de 0,001 à 0,5 % en poids.

10. Engrais contenant de l'urée selon la revendication 9, **caractérisé en ce que** le mélange est appliqué sur la surface de l'engrais contenant de l'urée .
